# EUROPÄISCHE PATENTANMELDUNG

(11) **EP 2 805 758 A1**
(43) Veröffentlichungstag der Anmeldung: **26.11.2014**
(21) Anmeldenummer: 14165572.0
(22) Anmeldetag: 23.04.2014
(51) Int. Cl.: B01D 53/50, B01D 53/73, B01D 53/78

(54) **Verfahren und Vorrichtung zum Behandeln eines mit Schwefeldioxid beladenen Gasstroms**

(30) Priorität: 23.05.2013 DE 102013008756
(71) Anmelder: Messer Austria GmbH, 2352 Gumpoldskirchen (AT)
(72) Erfinder: Rohovec, Joachim, 2500 Baden bei Wien (AT)
(74) Vertreter: Münzel, Joachim R.

(57) **Zusammenfassung**

Als Verfahren, einem Gasstrom schädliches Schwefeldioxid zu entziehen, kommt das so genannte Walther - Verfahren zum Einsatz. Dabei wird das ungereinigte Gas in wenigstens einem Absorptionsturm mit einem Gemisch aus Wasser und Ammoniak, einer so genannten Waschsuspension, besprüht, wodurch das Schwefeldioxid durch chemische Reaktionen weitgehend absorbiert wird. Durch Einblasen eines Oxidationsmittels, meist Luft ("Aufoxidation") wird die Flüssigkeit mit Sauerstoff angereichert und es entsteht eine Suspension von Ammoniumsulfat.

Bei der Erfindung wird das eingesetzte Oxidationsmittel mit reinem Sauerstoff überstöchiometrisch angereichert oder zumindest teilweise durch diesen ersetzt, um damit eine Kapazitätssteigerung der Entschwefelung herbeizuführen. Erfindungsgemäß wird dabei der Gehalt an Ammoniumsulfit und/oder Ammoniumsulfat in der Waschsuspension gemessen und als Regelparameter für die Dosierung des überstöchiometrischen Sauerstoffs eingesetzt. Dadurch wird ein besonders wirtschaftlicher und effizienzsteigernder Einsatz der Entschwefelungsanlage gewährleistet.

## Beschreibung

Die Erfindung betrifft ein Verfahren zum Behandeln eines mit Schwefeldioxid beladenen Gasstroms, bei dem in wenigstens einem Absorptionsturm dem zu reinigenden Gasstrom eine Wasser und Ammoniak enthaltende Waschsuspension zugeführt wird, wobei das im Gasstrom enthaltene Schwefeldioxid mit Wasser und Ammoniak zumindest teilweise unter Bildung von in der Waschsuspension lösbarem Ammoniumsufit reagiert, und bei dem in die Waschsuspensionen zwecks Oxidation des Ammoniumsulfits zu Ammoniumsulfat ein Oxidationsmittel eingeblasen und das schwefeldioxidarme gereinigte Abgas abgeführt wird. Die Erfindung betrifft des Weiteren eine zur Durchführung eines solchen Verfahrens geeignete Vorrichtung.

Derartige Verfahren sind unter dem Begriff "Rauchgasentschwefelung" bekannt; bei der Verwendung von Ammoniak handelt es sich speziell um das Walther-Verfahren.

Bei verschiedenen Verbrennungsprozessen in der chemischen Industrie, der Metallraffination sowie der Energiegewinnung entsteht u.a. das Gas Schwefeldioxid, welches eine wesentliche Ursache für das Waldsterben und andere Umweltschäden darstellt. Erhebliche Mittel wurden für die Installation von Rauchgasentschwefelungsanlagen (REA) bereitgestellt. Die Schwefeldioxidemissionen sanken dadurch nach den Daten des Bundesumweltamts von 5,3 Millionen Tonnen im Jahr 1990 auf weniger als 450 000 Tonnen im Jahr 2010. Es gibt verschiedene Verfahren, dem Rauchgas das schädliche Schwefeldioxid zu entziehen. Am häufigsten wird das so genannte Nassverfahren verwendet, das in Deutschland bei über 98% aller REA zum Einsatz kommt. Dabei wird das ungereinigte Rauchgas in einem Absorptionsturm, auch Waschoder Absorberturm genannt, mit einer Waschsuspension besprüht, wodurch das Schwefeldioxid aus dem Rauchgas herausgelöst und durch chemische Reaktionen weitgehend absorbiert wird. Der Entschwefelungsgrad kann auf diese Weise bis zu ca. 90% erreichen.

In den meisten Fällen kommt als Waschsuspension ein Gemisch aus Wasser und Kalk zum Einsatz, die durch Sprühdüsen, die im oberen Bereich eines Gegenstromwäschers (Absorber) angebracht sind, fein verteilt wird und nach unten in den Sumpf des Behälters rieselt. Dort wird das Umsetzungsprodukt des Schwefeldioxides (Calciumsulfit) durch Zugabe von Luftsauerstoff zu Calciumsulfat aufoxidiert (2 CaSO₃ + O₂ → 2 CaSO₄). Dieses Verfahren hat im Laufe der Zeit verschiedene Verbesserungen erfahren, wie beispielsweise der EP 0 815 923 A2 oder der US 5 158 065 B zu entnehmen ist.

Beim sogenannten "Walther-Verfahren" (auch Ammoniak - REA genannt), kommt als Waschsuspension eine ammoniakhaltige Lösung zum Einsatz. Varianten dieses Verfahrens werden beispielsweise in der DE 24 31 130 B1, der DE 25 18 386 C3 oder der DE 32 20 403 C1 beschrieben. Durch die Reaktion von Schwefeldioxid und Ammoniak entsteht Ammoniumsulfit:

SO₂ + NH₃ + H₂O → NH₄HSO₃ [1a]

NH₄HSO₃ + NH₃ → (NH₄)₂SO₃ [1b]

Im Sumpf des Absorptionsturms sammelt sich die mit Ammoniumsulfit beladene Waschsuspension an. Durch Einblasen von Luft, die sogenannten Aufoxidation, wird die Flüssigkeit mit Sauerstoff angereichert und es entsteht Ammoniumsulfat:

(NH₄)₂SO₃ + ½ O2 → (NH₄)₂SO₄ [2]

Nach Entzug des Wassers fällt Ammoniumsulfat in verkaufsfähiger Form an. Ammoniumsulfat wird beispielsweise in der Landwirtschaft als Düngemittel bzw. Düngemittel- Zusatzstoff eingesetzt.

Das Walther-Verfahren besitzt derzeit keine große technische Bedeutung und wird, explizit beispielsweise in der EP 2 411 123 B1, als nachteilig gegenüber der Kalkwäsche beschrieben, wenngleich das erzeugte Ammoniumsulfat als Düngemittel gewinnbringend verkauft werden kann. Tatsächlich erreicht zwar die Abtrennung von SO₂ ansprechend hohe Ausbeuten von 95% und mehr, als problematisch erweist sich jedoch die Oxidation des Ammoniumsulfits zum Ammoniumsulfat, die trotz Zuführung von Sauerstoff in der stöchiometrisch dazu erforderlichen Menge nicht selten Umsetzungsgrade von lediglich 50% oder darunter erreicht. Dies führt insbesondere zu einem relevanten Qualitätsverlust beim Nebenprodukt Ammoniumsulfat und verringert auf diese Weise die Wirtschaftlichkeit des Gesamtverfahrens.

Aufgabe der vorliegenden Erfindung ist daher, das Walther-Verfahren dahingehend zu verbessern, dass bei möglichst niedrigen Kosten einerseits ein zufriedenstellend niedriger Schwefeldioxidgehalt im behandelten Gasstrom erzielt wird, andererseits Ausbeute des Nebenprodukts Ammoniumsulfat verbessert werden kann.

Gelöst ist diese Aufgabe bei einem Verfahren der eingangs genannten Art dadurch, dass das in die Waschsuspensionen eingeblasene Oxidationsmittel überstöchiometrisch mit Sauerstoff angereichert und/oder durch Sauerstoff zumindest teilweise ersetzt wird.

Die Idee der Erfindung besteht also darin, das Oxidationsmittel, bei dem es sich beispielsweise um Luft handelt, mit Sauerstoff anzureichern, um der Waschsuspension eine im Hinblick auf die Oxidation des Ammoniumsulfits nach Reaktion [2] überstöchiometrische Menge an Sauerstoff zuzuführen. Die Erfindung beruht dabei auf der Erkenntnis, dass die vergleichsweise geringe Neigung des in der Waschsuspension vorliegenden Ammoniumsulfits, sich zu Ammoniumsulfat umzusetzen, darauf beruht, dass die Löslichkeit von Sauerstoff in einer bereits stark mit Ammoniumsulfit beladenen Lösung nur gering ist. Erst durch die überstöchiometrische Zugabe von Sauerstoff von beispielsweise 120% bis 150% der stöchiometrischen Sauerstoffmenge kann die Umsetzung von Ammoniumnitrit zu Ammoniumnitrat erheblich, bis zu einem Umsetzungsgrad von 90% und mehr gesteigert werden. Der Sauerstoff wird beispielsweise in Form von zusätzlicher Luft, Luft mit einem erhöhten Sauerstoffgehalt von mehr als 21 Vol.-% oder reinem Sauerstoff - gasförmig oder in tiefkalt verflüssigter Form - mit einer Konzentration von beispielsweise über 95 Vol.-% zugeführt.

Die aufgrund des hohen Umsetzungsgrades stark mit Ammoniumsulfat angereicherte Waschsuspension wird anschließend in einem Teilstrom (nachfolgend "Produktstrom" genannt) abgezogen und der weiteren Verarbeitung zugeführt; Aufgrund des hohen Ammoniumsulfatgehalts kann daraus insbesondere ein Dünger hoher Qualität gewonnen werden. Auf diese Weise wird die Wirtschaftlichkeit des Walther-Verfahrens wesentlich gesteigert. Da der Umsetzungsgrad des Ammoniumsufits von der Menge an zugeführtem überstöchiometrischem Sauerstoff abhängt, kann dadurch insbesondere kann dadurch auch die zuzuführende Menge an überstöchiometrischem Sauerstoff in Abhängigkeit vom Umsetzungsgrad geregelt und somit ein bestimmter Reinheitsgrad des erzeugten Ammoniumnitrats gewährleistet werden.

Gleichzeitig befindet sich aufgrund der guten Löslichkeit des Schwefeldioxids die Schwefeldioxidkonzentration in der Waschsuspension stets am Rande der Sättigungsgrenze. Daher erfolgt die Zuführung des überstöchiometrischen Sauerstoffs zweckmäßigerweise direkt oder indirekt in den Sumpf des jeweiligen Absorptionsturms, beispielsweise direkt mittels geeigneter Eintragsysteme in die Waschsuspension, und/oder indirekt durch die Beimischung von Sauerstoff in das der Waschsuspension zugeführte Oxidationsmittel.

Der überstöchiometrisch in der Waschsuspension vorliegende Sauerstoff führt zu einer Erhöhung des Reaktionsumsatzes der Reaktion [2] und dadurch zu einer Minderung der Konzentration von NH₃ in der Waschsuspension. Das System reagiert nach dem Prinzip von LeChatelier darauf damit, dass gemäß der Reaktion [1 a, 1 b] vermehrt SO₂ umgesetzt wird, um den Mangel an NH₃ auszugleichen. Die Zugabe von Sauerstoff begünstigt also zusätzlich die Auswaschung von Schwefeldioxid aus dem Rauchgas.

In einer vorteilhaften Ausgestaltung der Erfindung erfolgt eine Anreicherung bzw. Ersetzung des Oxidationsmittels mit bzw. durch Sauerstoff derart, dass in die Waschsuspension insgesamt eine Sauerstoffmenge von mindestens 110%, besonders bevorzugt zwischen 120% bis 150% der stöchiometrischen Sauerstoffmenge eingetragen wird. Ein deutlicher Überschuss von mindestens 10%, bevorzugt mindestens 20%, über der stöchiometrischen Sauerstoffmenge ist erforderlich, um den Umsetzungsgrad des Ammoniumsulfits in der Waschsuspension wesentlich zu steigern; bei Zuführung zwischen 120% bis 150% der stöchiometrischen Menge Sauerstoff werden in der Regel bereits 80% bis 90% und mehr des Ammoniumsulfits umgesetzt, sodass eine weitere Erhöhung der Sauerstoffzufuhr nur noch zu einer vergleichsweise geringen Steigerung des Umsetzungsgrads führt.

Um einen möglichst wirtschaftlichen Einsatz der Sauerstoffzuführleitung zu gewährleisten sieht eine zweckmäßige Weiterbildung der Erfindung vor, dass die Menge des zuzuführenden Sauerstoffs in Abhängigkeit von der Konzentration des Ammoniumsulfats und/oder des Ammoniumsulfits in der Waschsuspension geregelt wird mit dem Ziel, eine gewünschte Mindestkonzentration an Ammoniumsulfat im Produktstrom zu gewährleisten. Als Maß für die Konzentration an Ammoniumsulfat bzw. Ammoniumsulfits dient dabei bevorzugt die Dichteänderung der Waschsuspension im Verlauf des Waschvorgangs. Durch die fortwährende Erzeugung von Ammoniumsulfat steigt die Dichte der Suspension bis zu einem Sättigungswert. Der Abzug des Produktstroms erfolgt kontinuierlich oder chargenweise spätestens bei Erreichen des Sättigungswerts oder bei Erreichen eines vorgegebenen Werts der Dichte; gleichzeitig wird die Waschsuspension durch Zuführung von Wasser und Ammoniak, letzteres bevorzugt in gelöster Form, wieder aufgefüllt.

Eine besonders vorteilhafte Ausführungsform der Erfindung sieht vor, dass der zu reinigende Gasstrom nacheinander einen ersten Absorptionsturm und einen zweiten Absorptionsturm durchläuft, wobei die mit Ammoniumsulfit beladene Waschsuspension aus dem zweiten Absorptionsturm zumindest teilweise in den ersten Absorptionsturm eingeleitet wird, und zumindest in die Waschsuspension des ersten Absorptionsturms Sauerstoff in überstöchiometrischer Menge (bezogen auf die Oxidation des Ammoniumsulfits zu Ammoniumsulfat) eingeleitet wird. Der zu reinigende Gasstrom und die Waschsuspension durchlaufen bei dieser Ausgestaltung also die beiden Absorptionstürme im Gegenstrom, in der Waschsuspension des ersten Absorptionsturms ist die Konzentration an Ammoniumnitrit und Ammoniumnitrat also in der Regel höher als in der Waschsuspension des zweiten Waschturms. Demzufolge ist die Zufuhr überstöchiometrischen Sauerstoffs in den ersten Absorptionsturm besonders effektiv. Bei Erreichen einer vorgegebenen Konzentration an Ammoniumsulfat (oder bei Erreichen einer vorgegeben Dichte der Waschsuspension im ersten Absorptionsturm) wird ein Teil der Waschsuspension als Produktstrom abgezogen und einer weiteren Verwendung z.B. zur Düngemittelproduktion zugeführt. Selbstverständlich können im Rahmen der Erfindung auch mehr als zwei Absorptionstürme vorgesehen sein, die vom zu reinigenden Gasstrom und der Waschflüssigkeit im Gegenstrom durchlaufen werden.

Eine abermals vorteilhafte Ausgestaltung dieser Ausführungsform sieht vor, dass in beide Absorptionstürme Sauerstoff in überstöchiometrischer Menge zugeführt wird; die Regelung der Sauerstoffzufuhr erfolgt dabei in jedem Absorptionsturm separat, beispielsweise in Abhängigkeit von der Ammoniumsulfatkonzentration im jeweiligen Sumpf, oder in Abhängigkeit von einem gemeinsamen Parameter, beispielsweise von der Konzentration des Ammoniumsulfats im Produktstrom. Der Einsatz von Sauerstoff wird auf diese Weise sehr effizient gestaltet. Bei einer Forderung nach noch weiter gehender Reduzierung des Sauerstoffgehalts ist es im übrigen auch hier vorstellbar, noch weitere Absorptionstürme entsprechend dem ersten und zweiten Absorptionsturm in Reihe zu schalten.

Die Aufgabe der Erfindung wird auch mit einer Vorrichtung zur Durchführung des erfindungsgemäßen Verfahrens entsprechend der zuvor beschriebenen Verfahrensvarianten gelöst. Die erfindungsgemäße Vorrichtung umfasst wenigstens einen Absorptionsturm, in den eine Gasstromzuleitung zum Einleiten eines schwefeldioxidhaltigen Gases, eine Zuleitung zum Zuführen einer ammoniakhaltigen Waschsuspension, eine Ableitung zum Abführen der Waschsuspension aus dem Absorptionsturm und eine Zuführung zum Einleiten von Oxidationsmittel in die Waschsuspension einmündet. Die erfindungsgemäße Vorrichtung umfasst des Weiteren eine Einrichtung zum Einleiten von Sauerstoff in die Waschsuspension und/oder in das einzuleitende Oxidationsmittel sowie eine Mess- und Regeleinrichtung, die der Erfassung des Gehaltes an Ammoniumsulfit und/oder Ammoniumsulfat in der Waschsuspension und der Regelung der Menge an zuzuführendem Sauerstoff in Abhängigkeit vom erfassten Wert der Konzentration Ammoniumsulfit und/oder Ammoniumsulfat dient. Die erfindungsgemäße Vorrichtung ermöglicht einen hohen Umsetzungsgrad von Ammoniumnitrit zu Ammoniumnitrat gemäß der Reaktion [2] bei gleichzeitig guter Entschwefelungsleistung. Bei der erfindungsgemäßen Vorrichtung handelt es sich bevorzugt um eine Anlage zur Entschwefelung eines Rauchgases oder eines sonstigen, in einem industriellen Prozess anfallenden, schwefeldioxidhaltigen Gasstroms.

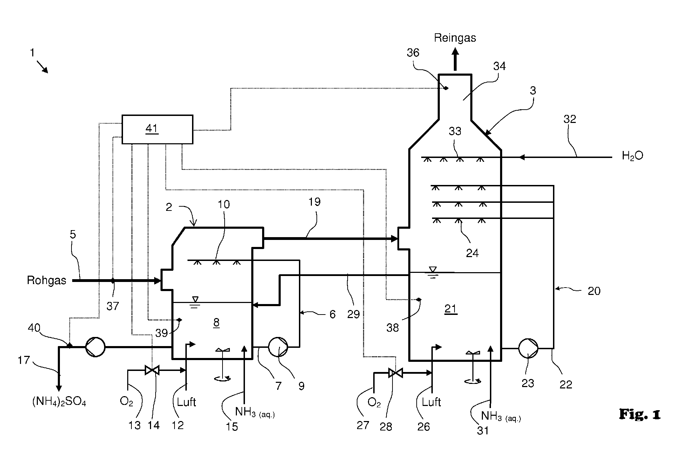

Im Folgenden soll anhand der Zeichnung ein Ausführungsbeispiel der Erfindung näher erläutert werden. Die einzige Zeichnung (Fig. 1) zeigt schematisch eine nach dem erfindungsgemäßen Verfahren arbeitende Entschwefelungsanlage.

Die in der Zeichnung dargestellte Vorrichtung 1, bei der es sich beispielsweise um eine Rauchgasentschwefelungsanlage handelt, umfasst zwei Wasch- oder Absorptionstürme, nämlich einen ersten, hier als Konzentrationsturm 2 bezeichnet, und einen zweiten Waschturm, der im Folgenden einfach als Absorptionsturm 3 bezeichnet wird. Der Konzentrationsturm 2 und der Absorptionsturm 3 werden nacheinander von einem schwefeldioxidhaltigen Rohgasstrom durchlaufen, der über eine Rohgaszuleitung 5 in den Konzentrationsturm 2 eingeleitet wird. Der Rohgaszuleitung 5 sind in bekannter und hier nicht gezeigter Weise Anlagen zur Ausfilterung von Stäuben und zur Rauchgasentstickung vorgeschaltet. Der Konzentrationsturm 2, in dessen Sumpf 8 eine ammoniakhaltige Waschsuspension vorliegt, ist mit einem Waschkreislauf 6 zum Umlaufen der Waschsuspension ausgestattet. Der Waschkreislauf 6 umfasst eine Leitung 7, über die ein Teil der Waschsuspension aus dem Sumpf 8 entnommen, mittels einer Pumpe 9 zu einer oberhalb des Sumpfes 8 angeordneten Düsenanordnung 10 gefördert und in das Innere des Konzentrationsturms 2 hinein zerstäubt wird. Dabei gelangt die zerstäubte Waschsuspension in direktem Kontakt mit dem über die Rohgaszuleitung 5 herangeführten Gasstrom.

In den Sumpf 8 des Konzentrationsturms 2 mündet des Weiteren eine Oxidationsmittel-zuführung 12 ein, die innerhalb des Konzentrationsturms 2 mit geeigneten Eintragseinrichtungen, wie Strömungsöffnungen oder Düsen versehen ist, um die im Sumpf 8 vorliegende Waschsuspension mit einem Oxidationsmittel, beispielsweise Luft, anzureichern. In die Oxidationsmittelzuführung 12 mündet eine SauerstoffZuführleitung 13 ein, die über ein Ventil 14 in hier nicht gezeigter Weise mit einer Sauerstoffquelle, beispielsweise einem Standtank, verbunden ist. Das Ventil 14 wird mittels eines ansteuerbaren Motors betätigt und ist in der Lage, eine genau dosierte Menge von Sauerstoff in die Oxidationsmittelzuführung 12 einzuspeisen. Weiterhin mündet in den Sumpf 8 eine Ammoniakzuleitung 15 ein, über die eine Ammoniak enthaltende Flüssigkeit, beispielsweise eine 15 Vol.-% Ammoniak enthaltende wässerige Lösung, dem Konzentrationsturm 2 zugeführt wird.

Vom Sumpf 8 geht des Weiteren eine Produktausleitung 17 ab, über die kontinuierlich oder in vorgegebenen Zeitabständen ein Teil der an Ammoniumsulfat reichen Waschsuspension aus dem Sumpf 8 abgezogen und einer weiteren Verwendung, insbesondere zur Düngemittelherstellung, zugeführt wird.

Der im Konzentrationsturm 2 gekühlte und von SO₂ teilweise gereinigte Gasstrom wird über eine Verbindungsleitung 19 zum Absorptionsturm 3 geführt, in dessen Sumpf 21 eine ammoniakhaltige Waschsuspension vorliegt. Der Absorptionsturm 3 ist gleichfalls mit einem internen Waschkreislauf 20 ausgestattet, mittels dessen ein Teil der Waschsuspension aus dem Sumpf 21 des Absorptionsturms 3 über eine mit einer Pumpe 23 ausgerüstete Leitung 22 zu einer oberhalb des Sumpfs 21 im Innern des Absorptionsturms 3 angeordneten Düsenanordnung 24 gefördert, dort zerstäubt und auf diese Weise mit dem Gasstrom in direkten Kontakt gebracht wird. wird. Im Sumpf 21 mündet des Weiteren eine Oxidationsmittelzuführung 26 ein, die innerhalb des Absorptionsturms 3 mit einen geeigneten Eintragssystem, beispielsweise Strömungsöffnungen oder Düsen, versehen ist, um die im Sumpf 21 vorliegende sammelnde Waschsuspension mit einem Oxidationsmittel, beispielsweise Luft, anzureichern. In die Oxidationsmittelzuführung 26 mündet eine Sauerstoff-Zuführleitung 27 ein, die über ein ansteuerbares Ventil 28 in hier nicht gezeigter Weise mit einer Sauerstoffquelle, beispielsweise einem Standtank, verbunden ist. Dabei kann es sich im Übrigen um die gleiche oder eine andere Sauerstoffquelle handeln wie die, die an die Sauerstoff-Zuführleitung 13 angeschlossen ist. Das Ventil 28 wird mittels eines ansteuerbaren Motors betätigt und ist in der Lage, eine genau dosierte Menge von Sauerstoff in die Oxidationsmittelzuführung 26 einzuspeisen. Über eine Leitung 29 wird bei Erreichen einer vorgegebenen Dichte der Waschsuspension ein Teil der mit Ammoniumsulfat angereicherten Waschsuspension vom Absorptionsturm 3 in den Konzentrationsturm 2 gepumpt. Weiterhin mündet in den Sumpf 21 eine Ammoniakzuleitung 31 ein, über die eine Ammoniak enthaltende Flüssigkeit, beispielsweise eine 15 Vol.-% Ammoniak enthaltende wässerige Lösung, in den Konzentrationsturm zugeführt wird. Zur Zuführung von Frischwasser dient eine Frischwasserleitung 32, die innerhalb des Absorptionsturms an Sprühdüsen 33 ausmündet. Zum Abführen des von Schwefeldioxid gereinigten Gasstroms aus dem Absorptionsturm 3 dient eine Abluftleitung 34.

Sowohl in der Abgaszuleitung 3 als auch in der Abluftleitung 34 sind Sensoren 36, 37 zum Messen des Schwefeldioxidgehaltes des dem Konzentrationsturm 2 zugeführten Rohgases bzw. des vom Absorptionsturm 3 abgeführten gereinigten Gasstroms angeordnet. Weitere Sensoren 38, 39 dienen zum Erfassen der Dichte der jeweiligen Waschsuspension in Sumpf 8 und Sumpf 21. Die Dichte der Waschsuspension dient während des bestimmungsgemäßen Betriebs der Rauchgasentschwefelungsanlage 1 als Maß für die Konzentration an Ammoniumsulfat in der Waschsuspension. Anstelle von Sensoren, die die Dichte bzw. Dichteänderung der Waschsuspension erfassen, sind jedoch im Rahmen der Erfindung auch andere Messprinzipien einsetzbar, die als direktes oder indirektes Maß für die Konzentration des Ammoniumsulfats in der jeweiligen Waschsuspension dienen können. Ein weiterer Sensor 40 dient der Erfassung der Ammoniumsulfatkonzentration im über die Produktausleitung 17 abgeführten Teilstrom der Waschsuspension.

Die Sensoren 36, 37, 38, 39, 40 sind ebenso wie die Motoren der Ventile 14, 28 mit einer Steuereinheit 41 datenverbunden. Die Steuereinheit 41 dient dazu, den Sauerstoffanteil des dem Konzentrationsturm 2 bzw. Absorptionsturm 3 zugeführten Oxidationsmittels in Abhängigkeit von den in der Abgaszuleitung 3 und/oder der Abluftleitung 34 gemessenen Werten der Konzentration an Schwefeldioxid und/oder der Dichte bzw. der Ammoniumsulfatkonzentration in der Waschsuspension in Sumpf 8 und/oder Sumpf 21 in der unten beschriebenen Weise zu regeln.

Beim Betrieb der Vorrichtung 1 tritt der mit Schwefeldioxid beladene Gasstrom über die Abgaszuleitung 3 in den Konzentrationsturm 2 ein. Das Schwefeldioxid wird im Konzentrationsturm 2 mittels der über die Düsenanordnung 10 eingesprühten Waschsuspension gekühlt und teilweise aus dem Abgas herausgewaschen. Dabei wird kontinuierlich über den Waschkreislauf 6 Waschsuspension aus dem Sumpf 8 abgezogen und über die Düsenanordnung 10 erneut mit dem Gasstrom in Kontakt gebracht. Das für die Reaktionen [1 a], [1 b] erforderliche Ammoniak wird der Waschsuspension im Konzentrationsturm 2 in wässeriger Lösung über die Ammoniakleitung 15 zugeführt. Mit der Zeit reichert sich die Waschsuspension mit Ammoniumsulfit an, das durch Zufuhr von Sauerstoff über die Oxidationsmittelzuleitung 12 zumindest teilweise zu Ammoniumsulfat umgesetzt wird. Der beim Kontakt mit der Waschsuspension gekühlte und von SO₂ vorgereinigte Gasstrom wird über die Verbindungsleitung 19 zum Absorptionsturm 3 geführt, in dem mittels der über die Düsenanordnung 24 eingesprühten Waschsuspension das restliche SO₂ zumindest weitgehend bzw. ausgewaschen wird. Auch hier wird mittels des Waschkreislaufs 20 Waschsuspension kontinuierlich aus dem Sumpf 21 abgezogen und über die Düsenanordnung 24 erneut mit dem Gasstrom in Kontakt gebracht. In der Waschsuspension reichert sich Ammoniumsulfit an, das durch Zufuhr von Oxidationsmittel über die Oxidationsmittelzuleitung 12 teilweise zu Ammoniumsulfat umgesetzt wird. Übersteigt die Dichte der Waschsuspension im Sumpf 21 und damit die Konzentration an Ammoniumsulfat in der Waschsuspension einen bestimmten, vorgegebenen Wert, wird ein Teilstrom der Waschsuspension aus dem Sumpf 21 des Absorptionsturms 3 dem Konzentrationsturm 2 zugeführt und der dortigen Waschsuspension im Sumpf 8 beigemischt. Die Waschsuspension im Sumpf 21 des Absorptionsturms 3 wird durch Wasser aus der Frischwasserzuleitung 32 und Ammoniaklösung aus der Ammoniakzuleitung 31 aufgefüllt.

Durch eine Zugabe von Sauerstoff über die Sauerstoffzuführleitung 13 in den Sumpf 8 des Konzentrationsturms 2 und der Sauerstoffzuführleitung 27 in den Sumpf 21 des Absorptionsturms 3 wird eine bezüglich der Reaktion [2] überstöchiometrische Menge an Sauerstoff zugeführt; beispielsweise beträgt die Sauerstoffmenge zwischen 120% und 150% der stöchiometrisch erforderlichen Menge. Dadurch wird der Reaktionsumsatz der Reaktion [2] gesteigert und gewährleistet, dass spätestens im Konzentrationsturm 2 eine hohe Umsetzung von Ammoniumsulfit zu Ammoniumsulfat von beispielsweise über 90% erfolgt. Über die Produktausleitung 17 wird ein Teil der Waschflüssigkeit in Sumpf 8 kontinuierlich oder chargenweise entnommen und als Produkt einer weiteren Verarbeitung zugeführt. Mittels der Steuereinheit 41 wird die Zufuhr an Sauerstoff über die Sauerstoffzuführleitungen 13, 27 in Abhängigkeit von einem einen vorgegebenen Zielwert der Konzentration an Ammoniumsulfat im Produkt in der Produktausleitung 17, m Sumpf 8 und/oder im Sumpf 21 geregelt.

Das zur Erzeugung des Ammoniumsulfats benötigte Ammoniumsulfit wird gemäß den Reaktionen [1a] und [1 b] bereitgestellt, was in der Folge im Übrigen auch zu einer verstärkten Lösung von SO₂ in den Waschsuspensionen und damit zu einer niedrigeren SO₂-Konzentration im Gasstrom führt. Die Änderung der Sauerstoffzufuhr über die Sauerstoffzuführleitungen 13, 27 beeinflusst somit auch die SO₂-Konzentration im Gasstrom. Auf dieses Weise ist es möglich, durch Zugabe einer genau dosierten Menge an Sauerstoff den Anteil an Schwefeldioxid in dem in der Abluftleitung 13 aus dem Absorptionsturm 11 abgeführten Abgas zuverlässig unterhalb eines vorgegebenen Grenzwertes zu halten und zugleich eine hohe Ausbeute an Ammoniumsulfat zu erzielen. Der hierzu erforderliche Wert der SO₂-Konzentration im Abgas wird am Sensor 36 gemessen und der Steuereinheit 41 zugeleitet.

Es ist im Übrigen auch möglich, bestehende Rauchgasentschwefelungsanlagen erfindungsgemäß nachzurüsten somit mit einer höheren als der nominalen Kapazität der Anlage zu betreiben, bzw. die nominale Kapazität auch dann zu gewährleisten, wenn die zu reinigenden Abgase einen zunehmenden Schwefeldioxidanteil aufweisen - bedingt beispielsweise durch einen höheren Schwefelgehalt im Brennstoff.

Die Erfindung kann in allen Prozessen eingesetzt werden, bei denen ein schwefeldioxidhaltiges Rauchgas entsteht, insbesondere, aber nicht beschränkt darauf, in kalorischen Kraftwerken.

### Bezugszeichenliste

- 1.: Vorrichtung
- 2.: Konzentrationsturm
- 3.: Absorptionsturm
- 4.: -
- 5.: Rohgaszuleitung
- 6.: Waschkreislauf
- 7.: Leitung
- 8.: Sumpf
- 9.: Pumpe
- 10.: Düsenanordnung
- 11.: -
- 12.: Oxidationsmittelleitung
- 13.: Sauerstoff-Zuführleitung
- 14.: Ventil
- 15.: Ammoniakzuleitung
- 16.: -
- 17.: Produktausleitung
- 18.: -
- 19.: Verbindungsleitung
- 20.: Waschkreislauf
- 21.: Sumpf
- 22.: Leitung
- 23.: Pumpe
- 24.: Düsenanordnung
- 25.: -
- 26.: Oxidationsmittelzuführung
- 27.: Sauerstoff-Zuführleitung
- 28.: Ventil
- 29.: Leitung
- 30.: -
- 31.: Ammoniakzuleitung
- 32.: Frischwasserleitung
- 33.: Sprühdüsen
- 34.: Abluftleitung
- 35.: -
- 36.: Sensor
- 37.: Sensor
- 38.: Sensor
- 39.: Sensor
- 40.: Sensor
- 41.: Steuereinheit

## Patentansprüche

1. Verfahren zum Behandeln eines mit Schwefeldioxid beladenen Gasstroms, bei dem in wenigstens einem Absorptionsturm (2,3) dem zu reinigende Gasstrom eine Wasser und Ammoniak enthaltende Waschsuspension zugeführt wird, wobei das im Gasstrom enthaltene Schwefeldioxid mit Wasser und Ammoniak zumindest teilweise unter Bildung von in der Waschsuspension lösbarem Ammoniumsulfit reagiert und bei dem in die Waschsuspensionen zwecks Oxidation des Ammoniumsulfits zu Ammoniumsulfat ein Oxidationsmittel eingeblasen und das schwefeldioxidarme gereinigte Abgas abgeführt wird,
**dadurch gekennzeichnet,**
**dass** das in die Waschsuspensionen eingeblasene Oxidationsmittel überstöchiometrisch mit Sauerstoff angereichert und/oder zumindest teilweise durch Sauerstoff ersetzt wird.

2. Verfahren nach Anspruch 1, **dadurch gekennzeichnet, dass** der Waschsuspension insgesamt eine Sauerstoffmenge von mindestens 110%, bevorzugt zwischen 120% und 150% der stöchiometrischen Sauerstoffmenge zugeführt wird.

3. Verfahren nach Anspruch 1 oder 2, **dadurch gekennzeichnet, dass** die Menge des zuzuführenden Sauerstoffs in Abhängigkeit von der Konzentration des Ammoniumsulfats und/oder des Ammoniumsulfits in der Waschsuspension geregelt wird.

4. Verfahren nach einem der vorhergehenden Ansprüche, **dadurch gekennzeichnet, dass** die Einleitung des Oxidationsmittels und/oder des überstöchiometrischen Sauerstoffs in die Waschsuspension in den Sumpf (8, 21) des Absorptionsturms erfolgt.

5. Verfahren nach einem der vorhergehenden Ansprüche, **dadurch gekennzeichnet, dass** der zu reinigende Gasstrom nacheinander einen ersten Absorptionsturm (2) und einen zweiten Absorptionsturm (3) durchläuft, wobei die mit Ammoniumsulfit beladene Waschsuspension aus dem zweiten Absorptionsturm (3) zumindest teilweise in den ersten Absorptionsturm (2) eingeleitet wird und die Einleitung des überstöchiometrischen Sauerstoffs zumindest in die Waschsuspension des ersten Absorptionsturms (2) erfolgt.

6. Verfahren nach Anspruch 5, **dadurch gekennzeichnet, dass** in den Absorptionstürmen (2, 3) jeweils unabhängig voneinander eine Einleitung von überstöchiometrischem Sauerstoff erfolgt.

7. Vorrichtung (1) zur Durchführung eines Verfahrens nach einem der vorhergehenden Ansprüche, mit wenigstens einem Absorptionsturm (2, 3), in den eine Gasstromzuleitung (5) zum Einleiten eines schwefeldioxidhaltigen Gases in den Absorptionsturm (2, 3) eine Zuleitung (15, 31) zum Zuführen einer ammoniakhaltigen Flüssigkeit, eine Ableitung (17, 29) zum Abführen der Waschsuspension aus dem Absorptionsturm (2, 3) und eine Zuführung (12, 26) zum Einleiten von Oxidationsmittel in die Waschsuspension einmündet,
**dadurch gekennzeichnet,**
**dass** der wenigstens eine Absorptionsturm (2, 3) oder die Zuführung (12, 26) zum Einleiten von Oxidationsmittel mit einer Einrichtung (12, 27) zum Einleiten von Sauerstoff in die Waschsuspension und/oder in das der Waschsuspension zuzuführende Oxidationsmittel ausgerüstet ist und eine Mess- und Regeleinrichtung (41) zum Erfassen des Gehaltes an Ammoniumsulfit und/oder Ammoniumsulfat in der Waschsuspension und zum Regeln des Eintrags von Sauerstoff in Abhängigkeit vom erfassten Wert des Gehaltes an Ammoniumsulfit und/oder Ammoniumsulfat vorgesehen ist.
